# EUROPEAN PATENT SPECIFICATION

(11) **EP 1 215 092 B1**
(45) Date of publication and mention of the grant of the patent: **26.09.2007**
(21) Application number: 00670012.4
(22) Date of filing: 13.12.2000
(51) Int. Cl.: B60R 21/20, B29C 45/14

(54) **Process for manufacturing pillar covers for motor vehicles**
Verfahren zur Herstellung von Pfeilerbedeckungen für Kraftfahrzeuge
Procédé pour la fabrication de couvertures de piliers pour les véhicules automobiles

(43) Date of publication of application: 19.06.2002
(73) Proprietor: Cie Automotive, S.A., 20720 Azkoitia (Guipuzcoa) (ES)
(72) Inventor: Da Silva, José Guedes, 3080-189 Figueira da Foz (PT)
(74) Representative: Carpintero Lopez, Francisco

(56) References cited:
- EP-A- 0 857 624
- EP-A- 0 872 390
- DE-A- 4 242 117
- US-A- 5 096 220

## Description

The present invention relates to a process for manufacturing reinforcement covers for pillars to be used in motor vehicles equipped with airbags (side airbags and curtain airbags), which meet legal requirements, are recyclable and also involve low costs.

### Background to the invention

For the safety of drivers and passengers, the car industry fits motor vehicles with at least one airbag, consisting of a protective cushion which expands. This cushion can be inflated by filling it with a gas (although this is not very common) or by combustion of a solid propergol, which is ignited using an electrically activated detonator. The gases resulting from combustion "fill" or inflate the cushion, which occurs in less than 25 milliseconds.

In the case of curtain airbags, the force exerted is sufficient for breaking up the pillar covers, as a result of the collision of the airbags fitted in the roof as they move downwards along the side windows of the car or by virtue of the pressure of the straps that fasten the edges of these airbags, which are situated below the pillar covers.

In fact, the material used to make pillar covers normally consists of a mixture of polycarbonate (PC) and acrylonitrile-butadiene-styrene (ABS), or it may consist of polypropylene (PP), all of which are materials that are relatively fragile at low temperatures and offer low resistance to impact, with a low capacity to absorb energy. For this reason, they fragment into small splinters, which can be highly dangerous to the occupants of the vehicle.

Various attempts have been made to minimise this serious problem, among which we would mention in particular mechanical solutions such as that of patent application WO98/19893 and a solution with a covering, such as that of patent EP 0857624.

Patent application WO98/19893 relates to ways of arranging and constructing a protective device for passengers in a motor vehicle, in order to prevent the frame of the pillar from fragmenting when an airbag situated inside the pillar expands. An airbag fitted inside a pillar is situated in a space formed by the body of the front pillar and by the frame of the pillar. When the airbag expands, the frame of the pillar is pushed by the pressure caused by the expansion of the airbag, so that an opening is formed between the body of the pillars and the frame thereof, which enables the airbag to expand into a compartment.

Patent EP 0857624 relates to a pillar of a vehicle with a covering. The covering has an opening area and an assembly area. In the opening area there are points of articulation or torsion. The covering is fixed to the pillar by means of accessories situated in the assembly area. The points of articulation or torsion are preferably situated inside the structure.

Prior art proposes that the places where the airbags are stored should be covered with fabric. Furthermore, this solution is the one which is generally used in cars with a strap or curtain airbag. In most cases, the fabric covering prevents the splinters from injuring the passengers. In fact, although there is still fragmentation of the components in the places where the airbags are stored, the fragments are not released and they remain inside the fabric.

None of the solutions of prior art completely resolves the problem encountered by manufacturers, who must observe both stringent safety requirements and environmental regulations which require all the materials used to be recyclable, in accordance with European directive 2000/53/CE (vehicles at the end of their useful life), which states that by 31.12.2006 the reuse and recovery of all vehicles at the end of their life must increase to a minimum of 85%. Reuse and recycling must be increased to a minimum of 80%.

Furthermore, the costs involved in the solutions described above are high and sometimes prevent them from being applied to all cars in general, including cars at the lower end of the range. In fact, the manufacture of pillars covered with fabric is considerably more expensive, not only because of the additional fabric required, but also because of processing costs (equipment and logistics) and the labour required for assembling the covering, and costs are also increased considerably by the extra expense of moulds.

It is therefore necessary to find a new process or technology to replace the use of fabric covering, which provides benefits and does not have the disadvantages mentioned above (recycling, high service costs).

Appearance is also a fundamental aspect. The solution based on a fabric covering deteriorates with time and use, and the fabric becomes dirty and acquires unpleasant odours. It also becomes a breeding ground for micro-organisms, which can be harmful to health.

### Subject-matter of the invention

The main objectives of this invention are the following:
1. Devising of a solution which strengthens the properties of the plastic components on impact and which allows the filling of the airbag to be released without breaking up into fragments, within a temperature range defined for the operation of the vehicle (-35° to 80°C).
2. The covering must be totally recyclable (in accordance with European standard n° 2000/53/CE).
3. Production must involve low total costs (moulds, production equipment and production).
4. The appearance of the pillars must be of a very high quality and must be maintained throughout the life of the car.

### Brief description of the drawings

Simply for illustrative purposes and without limiting the scope of the invention, drawings are attached hereto which permit an easier understanding of the description of the invention, wherein:
Figure 1 represents a schematic view from above of the component with the fabric but without the final covering; and
Figure 2 represents the component represented in the previous figure but from below.

### Detailed description of the invention

As mentioned above, the main characteristic of this invention is the fitting of a piece of reticulated fabric during the moulding process by injection of the pillar cover. The reticulated fabric is placed in the mould for the pillar cover and after injection it is placed inside the plastic component.

Subsequently, the "leftover" pieces of fabric (excess material) are cut away and the pillar can once again be placed inside a new mould to be fitted with the outer covering of finishing material, which will give it the desired aesthetic features.

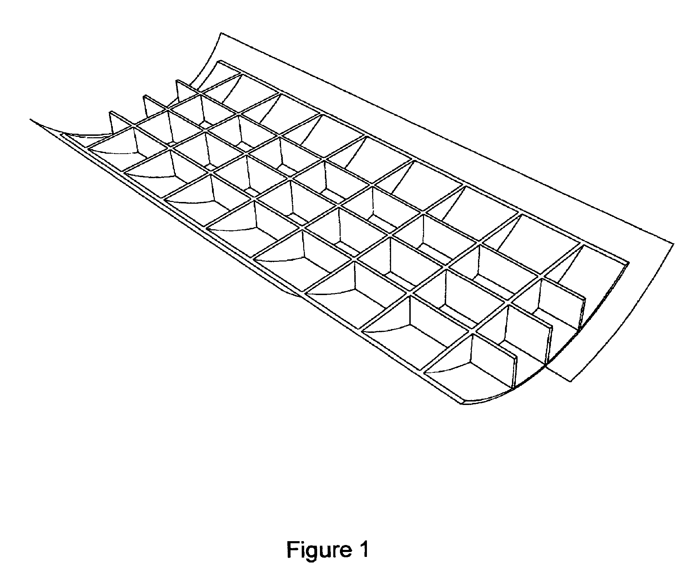

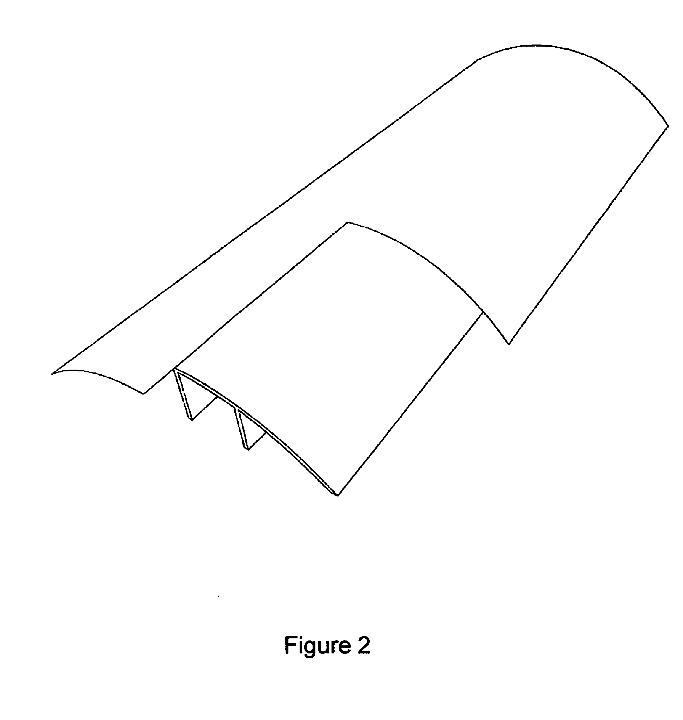

The complete manufacturing process consists of the following steps:
- After placing the fabric in the mould between the plug and the cavity of the injection mould, said mould is closed. The piece thereby obtained can be the same shape as the component or it may simply be a part thereof (figure 1);
- The thermoplastic material is then injected inside the mould (figure 2);
- The injected component is removed from the mould;
- The excess fabric (and possibly plastic) is cut;
- The component obtained is placed inside a new mould and the covering material is injected onto said component.

The pillar cover thus manufactured is more resistant to impact at low temperatures or atmospheric temperature and it is more heat-resistant. It also has properties which allow for improved perforation capacity and treatment surface.

This new material confers on the pillar the following properties:
- Non-fragmentable;
- Totally recyclable;
- Excellent finish which does not deteriorate with time and use;
- It does not store micro-organisms and/or unpleasant odours;
- Washable;
- Greater absorption of energy upon impact; -
- Low production costs.

Furthermore, the pillar covers can be produced using polypropylene (PP), which is a cheaper polymeric material and makes it possible to implement single material policies.

The development of this pillar includes the presence of a rib structure in the first component injected by moulding (the inside surrounding the fabric), which allows it to absorb energy in a head-on side collision, in accordance with the U.S. standard USFMVSS 201 (Federal Motors Vehicle Safety Standard - Occupant Protection in Interior Impact), which stipulates that a pillar cover must not exceed 1000 HIC (d).

As will be obvious to persons skilled in the art, various alterations are possible to what has been described above, for example with regard to the materials used. Any alterations must be considered within the spirit of the following claims.

## Claims

1. Process for manufacturing covers for pillars or any other components coming into contact with the explosion of airbags, which confers greater resistance to an impact thereby avoiding fragmentation into splinters at any temperature between - 35° and +80°C when the airbags explode and which allows the materials used to be recycled and also reused in the production of identical components, **characterised in that**:
a) a fabric is placed in an injection mould between a plug and a cavity of the injection mould, and said mould is closed;
b) a thermoplastic material is injected inside the mould, whereby an injected component is obtained,
c) the injected component is removed from the mould;
d) excess fabric is cut;
e) the component obtained in step d) is placed inside a new mould and covering material is injected onto said component.

2. Process according to claim 1, for manufacturing covers for pillars in vehicles that can be affected by the explosion of airbags.

3. Process according to claim 1 or 2, wherein step d) further comprises cutting excess plastic.

4. Cover for pillars or any other component for storing airbags manufactured according to any of the previous claims.

## Patentansprüche

1. Verfahren zum Herstellen von Abdeckungen für Holme oder andere Komponenten, die in Kontakt mit der Explosion eines Airbags kommen können, das eine höhere Widerstandsfähigkeit gegen einen Aufprall bietet und **dadurch** eine Zerteilung in Splitter bei einem Explodieren des Airbags im Temperaturbereich zwischen -35°C und + 80°C verhindert und das es ermöglicht, dass die verwendeten Materialien recycelt und bei der Herstellung identischer Komponenten wiederverwendet werden,
**dadurch gekennzeichnet, dass**:
a) ein Gewebe in einer Gussform zwischen einem Stopfen und einer Kavität der Gussform angeordnet wird, und die Form geschlossen wird;
b) ein thermoplastisches Material in das Innere der Form eingespritzt wird, wodurch eine Gusskomponente erhalten wird;
c) die Gusskomponente aus der Form entfernt wird;
d) das überschüssige Gewebe abgeschnitten wird;
e) die in Schritt d) erhaltene Komponente in einer neuen Form angeordnet wird und ein Abdeckmaterial auf die Komponente gespritzt wird.

2. Verfahren nach Anspruch 1 zum Herstellen von Abdeckungen für Holme in Fahrzeugen, die durch die Explosion von Airbags beeinflusst werden können.

3. Verfahren gemäß Anspruch 1 oder 2, wobei Schritt d) ferner das Abschneiden von überschüssigem Kunststoff umfasst.

4. Abdeckung für Holme oder für andere Komponenten zum Aufnehmen von Airbags hergestellt gemäß einem der vorstehenden Ansprüche.

## Revendications

1. Procédé de fabrication de couvercles pour colonnes ou tout autre composant entrant en contact avec les coussins de sécurité gonflables lors de leur explosion, qui confère une plus grande résistance à un impact, évitant ainsi la fragmentation en éclats à une quelconque température entre - 35 °C et + 80 °C lorsque les coussins de sécurité gonflables explosent et qui permet aux matériaux utilisés d'être recyclés et également réutilisés dans la fabrication de composants identiques, **caractérisé en ce que** :
a) un tissu est placé dans un moule à injection entre un bouchon et une cavité du moule à injection et ledit moule est fermé ;
b) un matériau thermoplastique est injecté à l'intérieur du moule, moyennant quoi on obtient un composant injecté ;
c) le composant injecté est enlevé du moule ;
d) l'excès de tissu est découpé ;
e) le composant obtenu dans l'étape d) est placé à l'intérieur d'un nouveau moule et un matériau de recouvrement est injecté sur ledit composant.

2. Procédé selon la revendication 1, destiné à la fabrication de couvercles pour colonnes dans des véhicules susceptibles d'être affectés par l'explosion de coussins de sécurité gonflables.

3. Procédé selon la revendication 1 ou 2, dans lequel l'étape d) comprend en outre le découpage du surplus de plastique.

4. Couvercle pour colonnes ou tout autre composant destiné à stocker des coussins de sécurité gonflables, fabriqué selon l*'*une quelconque des revendications précédentes.
